(19) Europäisches Patentamt
European Patent Office
Office européen des brevets

(11) **EP 4 703 148 A1**

(12) **EUROPEAN PATENT APPLICATION**

(43) Date of publication:
04.03.2026 Bulletin 2026/10

(21) Application number: 25193046.7

(22) Date of filing: **31.07.2025**

(51) International Patent Classification (IPC):
***B60C 1/00*** (2006.01)    ***B60C 9/00*** (2006.01)
***B60C 9/20*** (2006.01)    ***B60C 11/03*** (2006.01)

(52) Cooperative Patent Classification (CPC):
**B60C 1/0016; B60C 9/0007; B60C 9/2006;
B60C 11/033;** B60C 2009/2077

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.08.2024 JP 2024146636**

(71) Applicant: **SUMITOMO RUBBER INDUSTRIES,
LTD.
Kobe-shi, Hyogo 651-0072 (JP)**

(72) Inventor: **YAMAMOTO, Keisuke
Hyogo, 651-0072 (JP)**

(74) Representative: **Forresters IP LLP
Skygarden
Erika-Mann-Straße 11
80636 München (DE)**

(54) **TIRE**

(57) Provided is a tire comprising a tread part (12) and a belt layer (17), the tread part having at least one rubber layer, wherein a cap rubber layer constituting a tread surface of the tread part is composed of a rubber composition comprising a rubber component, a liquid rubber, and a terpene-based resin, wherein the belt layer has a steel cord consisting of 1 to 4 filaments, wherein an outer diameter D of the filament is 0.45 mm or less, and wherein Y is 0.50 or more and Y/D is 1.6 or more, when Y=A/P is defined, where A represents an acetone extraction amount, in % by mass, of the rubber composition and P represents a polymer amount, in % by mass, in the rubber composition.

EP 4 703 148 A1

**Description**

TECHNICAL FIELD

The present invention relates to a tire.

BACKGROUND OF THE INVENTION

A pneumatic tire has been required for achieving both grip performance during straight running and grip performance during cornering. JP 2012-158662 A discloses a rubber composition for tire tread that comprises a certain carbon black and has excellent grip performance and peak grip performance from an initial stage of running.

SUMMARY OF THE INVENTION

It is an object of the present invention to provide a tire capable of improving grip performance during cornering.
The present invention relates to a tire comprising a tread part and a belt layer, the tread part having at least one rubber layer, wherein a cap rubber layer constituting a tread surface of the tread part is composed of a rubber composition comprising a rubber component, a liquid rubber, and a terpene-based resin, wherein the belt layer has a steel cord consisting of 1 to 4 filaments, wherein an outer diameter D of the filament is 0.45 mm or less, and wherein Y is 0.50 or more and Y/D is 1.6 or more, when Y=A/P is defined, where A represents an acetone extraction amount, in % by mass, of the rubber composition and P represents a polymer amount, in % by mass, in the rubber composition.
According to the present invention, provided is a tire that can improve grip performance during cornering.

BRIEF DESCRIPTION OF THE DRAWINGS

FIG. 1 is a cross-sectional view of a tire relating to one embodiment of the present invention.
FIG. 2 is a view schematically showing a belt layer.
FIG. 3 is an explanatory view of one configuration example of a single-twist steel cord.

DETAILED DESCRIPTION

The tire that is one embodiment of the present invention is a tire comprising a tread part and a belt layer, the tread part having at least one rubber layer, wherein a cap rubber layer constituting a tread surface of the tread part is composed of a rubber composition comprising a rubber component, a liquid rubber, and a terpene-based resin, wherein the belt layer has a steel cord consisting of 1 to 4 filaments, wherein an outer diameter D of the filament is 0.45 mm or less, and wherein Y is 0.50 or more and Y/D is 1.6 or more, when Y=A/P is defined, where A represents an acetone extraction amount, in % by mass, of the rubber composition and P represents a polymer amount, in % by mass, in the rubber composition.
Although it is not intended to be bound by a theory, a reason why grip performance during cornering of the tire of the present invention is improved is considered as follows.
The rubber composition constituting the cap rubber layer of the present invention (1) comprises a liquid rubber that is a low molecular weight polymer, so that a molecular chain terminal of the liquid rubber contributes to improvement of heat generation. Moreover, (2) by using the terpene-based resin in combination, the liquid rubber becomes easy to be dispersed uniformly in the cap rubber layer due to its compatibility with the terpene-based resin.
Furthermore, (3) by reducing the filament diameter of the steel cord, rigidity of the steel cord in a circumferential direction is reduced, which is therefore considered to make the steel cord easy to deform along concavity and convex of a road surface. And, (4) by increasing the acetone extraction amount of the rubber composition constituting the cap rubber layer, flexibility of the tread rubber is improved. Furthermore, by adjusting the acetone extraction amount of the rubber composition constituting the cap rubber layer in accordance with the filament diameter of the steel cord, followability of the tread rubber to the road surface is improved, and it is considered that the molecular chain terminal of the liquid rubber more easily generates heat.
Then, it is considered that, with cooperation of (1) to (4) described above, a remarkable effect synergistically improving grip performance during cornering is achieved.
The rubber component preferably comprises 50% by mass or more of a styrene-butadiene rubber from the viewpoint of grip performance.
The rubber composition preferably comprises 80 parts by mass or more of silica based on 100 parts by mass of the rubber component from the viewpoint of abrasion resistance.

The rubber composition preferably comprises silica having an average primary particle size of 20 nm or less. By setting the average primary particle size of silica within the above-described range, it is considered that a balance between grip performance and abrasion resistance is improved.

A total styrene amount in the rubber component is preferably 20% by mass or more. By setting the total styrene amount in the rubber component within the above-described range, it is considered that the cap rubber that follows the road surface efficiently generates heat.

The steel cord can be appropriately used as a $1 \times 1$ or $1 \times 4$ structure. Among them, the $1 \times 1$ structure is particularly preferable because the cord is easily deformed.

The number of the steel cords arranged per 50 mm in a tire width direction is preferably 20 or more and 60 or less from the viewpoint of the effects of the present invention.

The steel cord preferably has a ternary plating layer consisting of copper, zinc, and cobalt. When ternary plating is adopted, cobalt, which has a greater tendency to ionize than copper, dissolves preferentially, thereby suppressing the thickening of the adhesive layer due to copper elution after hygrothermal degradation, and the adhesive force can be maintained at a high level, so that it is considered that steering stability and durability are improved.

It is preferable that $|S_{in}-S_{out}|/(Y/D)$ is greater than 0 and less than 5.0, where $S_{in}$ represents a groove area ratio, in %, of a ground-contacting surface of an inner tread part constituting an end side inside a vehicle, with a tire equator centered, and $S_{out}$ represents a groove area ratio, in %, of a ground-contacting surface of an outer tread part constituting an end side outside the vehicle. By setting $|S_{in}-S_{out}|/(Y/D)$ within the above-described range, it is considered that grip performance can be improved.

<Definitions>

A "tread part" is a member comprising a part that forms a ground-contacting surface of a tire, and in a case where the tire comprises a member that forms a tire skeleton from steel or a textile material such as a belt layer, a belt reinforcing layer, a carcass, and the like, on a cross section of the tire taken along a plane including a tire rotation axis, a member arranged on an outer side therefrom in a tire radial direction.

A "belt layer" is a layer provided on an outer side in a tire radial direction with respect to a carcass, which corresponds to a plurality of working layers in which internal reinforcing materials are inclined at an angle of about 18° to 30° relative to a tire circumferential direction and overlap in the opposite direction, a circumferential belt layer in which the internal reinforcing materials are oriented at an angle of $\pm 10°$ relative to the tire circumferential direction, or the like.

A "standardized state" is a state where a tire is rim-assembled on a standardized rim and air under a standardized internal pressure is filled, and no load is applied. Unless otherwise specified, a tire in the standardized state is used.

A "dimension of each part of a tire" is, for one appearing on the outer surface of the tire, a value specified in a standardized condition unless otherwise specified, while it is, for one present inside the tire or on a tire cutting surface, a value specified in a condition where, for example, the tire is cut on a plane including a tire rotation axis and the cut tire piece is held to a rim width of a standardized rim.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load in kg" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity $W_L$ calculated separately is defined as a standardized load.

The "maximum load capacity $W_L$ in kg" is calculated by the following equations. Wherein "V" is a virtual volume, in $mm^3$, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = [(Dt/2)^2 - (Dt/2 - Ht)^2] \times \pi \times Wt$$

A "groove area ratio" is calculated, in a standardized state, from a grounding shape when a standardized load is applied to press a tread against a flat surface. The grounding shape can be obtained by mounting a tire on a standardize rim and holding a standardize internal pressure, followed by applying an ink to, for example, a tread part, applying a standardize load to press the tread part vertically against a cardboard or the like (camper angle at 0°), and transferring the ink applied to the tread part. Then, the obtained grounding shape is divided with a tire equator centered, making it possible to calculate a groove area ratio of a ground-contacting surface of an inner tread part constituting an end side inside a vehicle and a ground-contacting surface of an outer tread part constituting an end side outside the vehicle, respectively.

A "rubber component of a rubber composition" is a component that contributes to crosslinking in the rubber composition and generally has a weight-average molecular weight (Mw) of 10,000 or more. The Mw of the rubber component is preferably 50,000 or more, more preferably 150,000 or more, further preferably 200,000 or more. Moreover, the Mw of the rubber component is preferably 2,000,000 or less, more preferably 1,500,000 or less, further preferably 1,000,000 or less.

A "plasticizing agent" is a material that imparts plasticity to a rubber component, which is a component extracted from a rubber composition using acetone. The plasticizing agent includes a plasticizing agent that is liquid (in a liquid state) at 25°C and a plasticizing agent that is solid at 25°C. However, it shall not comprise wax and stearic acid commonly used in the tire industry.

A "content of a plasticizing agent" also includes an amount of a plasticizing agent contained in an extended rubber component previously extended with the plasticizing agent such as oil, a resin component, a liquid rubber component, and the like. The same applies to a content of oil, a content of a resin component, and a content of a liquid rubber, for example, an extending oil is included in the content of oil when an extending component is oil.

<Measuring method>

An "acetone extraction amount" can be calculated by the following equation after immersing each rubber test piece in acetone for 72 hours to extract a soluble component and measuring masses of each test piece before and after extraction in accordance with JIS K 6229:2015.

(Acetone extraction amount (% by mass)) = {(mass of rubber test piece before extraction - mass of rubber test piece after extraction) / (mass of rubber test piece before extraction)} $\times$ 100.

A "polymer amount, in % by mass" in a rubber composition indicates a ratio of a total mass of a rubber component in the rubber composition to a total mass of the rubber composition, and can be calculated by the following equation after pyrolyzing a rubber test piece after acetone extraction while raising a temperature from room temperature to 750°C at a rate of 10°C/min in a nitrogen stream and measuring masses of each rubber test piece before and after pyrolysis by a thermal weight measuring method according to JIS K 6226-2:2003.

(Polymer amount (% by mass)) = {(mass of rubber test piece before pyrolysis - mass of rubber test piece after pyrolysis) / (mass of rubber test piece before pyrolysis)} $\times$ 100.

An "average thickness of a plating layer" is measured in accordance with JIS H 8501:1999.

A "styrene content" is calculated by pyrolysis gas chromatography or NMR measurement (1H-NMR or 13C-NMR). Unlike physical property values such as a complex elastic modulus (E*) and the like, an amount of a component such as the "styrene content" has a true value that is independent of a measuring method, so it is preferable to use a measuring method with as high accuracy as possible. Besides, in the present specification, "pyrolysis gas chromatography" refers to a method of heating a sample in a pyrolyzer, separating individual components contained in gas phase generated by this heating using a separation column, and analyzing each separated component. The styrene content is applied to, for example, a rubber component having a repeating unit derived from styrene such as an SBR and the like (styrene unit).

A "vinyl content (1,2-bond butadiene unit amount)" is calculated by pyrolysis gas chromatography or NMR measurement ($^1$H-NMR or $^{13}$C-NMR). Similarly with the "styrene content", the "vinyl content" has a true value that is independent of a measuring method, so it is preferable to use a measuring method with as high accuracy as possible. The vinyl content is applied to, for example, a rubber component having a repeating unit derived from butadiene such as an SBR, a BR, and the like.

A "cis content (cis-1,4-bond butadiene unit amount)" is a value measured by infrared absorption spectrometry or NMR measurement ($^1$H-NMR or $^{13}$C-NMR) according to JIS K 6239-2:2017 and is applied to, for example, a rubber component having a repeating unit derived from butadiene such as a BR and the like. Similarly with the "styrene content", the "cis content" has a true value that is independent of a measuring method, so it is preferable to use a measuring method with as high accuracy as possible.

A "total styrene amount in a rubber component" is a total content, in % by mass, of styrene units contained in 100 % by mass of a rubber component, which is a value obtained by multiplying a styrene content, in % by mass, by a mass fraction in a rubber component to obtain a calculated value, for each of respective rubber components, and summing these values. Specifically, it is calculated by $\Sigma$(styrene content (% by mass) of each styrene unit-containing rubber $\times$ content (% by mass) of each styrene unit-containing rubber in rubber component / 100). For example, when the rubber component consists of 20% by mass of a first SBR (styrene content: 25% by mass), 30% by mass of a second SBR (styrene content: 27.5% by mass), and 50% by mass of a BR, a total styrene amount in the rubber component is about 13.3% by mass (= (25×20/100)+(27.5×30/100)+(0×10/100)).

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area (N$_2$SA) of carbon black" is measured according to JIS K 6217-2:2017.

A "nitrogen adsorption specific surface area (N$_2$SA) of silica" is measured by the BET method according to ASTM D3037-93.

An "average primary particle size" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of {4 $\times$ (area of particle)/$\pi$}) is calculated from the microscope image to be defined as a particle size. The average primary particle size is applied to silica, carbon black, etc.

A "softening point of a resin component" is a temperature at which a sphere drops when the softening point specified in JIS K 6220-1:2015 7.7 is measured with a ring and ball softening point measuring device.

A procedure for producing a tire that is one embodiment of the present invention will be described in detail below. However, the following descriptions are illustrative for explaining the present invention, and are not intended to limit the technical scope of the present invention to this description range only.

<Tire>

The tire relating to one embodiment of the present invention will be described below with reference to the drawings.

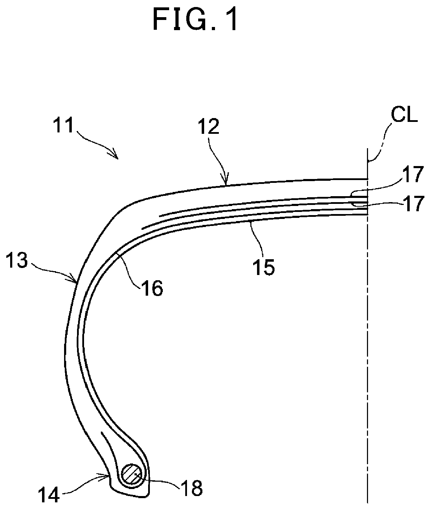

FIG. 1 shows a cross-sectional view of a tire 11 relating to the present embodiment taken along a plane passing through a tire rotation axis. Although FIG. 1 shows only a left-side part with respect to a center line (CL), it has consecutive similar structures also on the right side of the CL with the CL being as an axis of symmetry. As shown in FIG. 1, the tire 11 comprises a tread part 12, a sidewall part 13, a bead part 14, an inner liner 15, a carcass 16, a belt layer 17, and a bead core 18. The belt layer 17 has two layers, but the number of layers is not particularly limited and can be arbitrarily selected.

The tread part 12 may be a tread part consisting of a single rubber layer, or may be a tread part having a cap rubber layer constituting a tread surface and one or more rubber layers present between the cap rubber layer and the belt layer 17.

<Belt layer and steel cord>

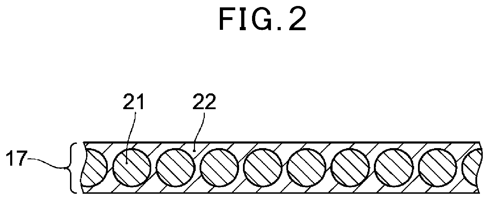

FIG. 2 shows a cross-sectional view of a steel cord 21 taken along a plane perpendicular to a longitudinal direction. A ply forming the belt layer 17 has a plurality of steel cords 21 and a topping rubber 22. The plurality of steel cords 21 are arranged in parallel in a row. Moreover, the topping rubber 22 covers the steel cord 21, and the entire circumference of each steel cord is covered with the topping rubber 22. The steel cord 21 is embedded in the topping rubber 22.

The steel cord 21 may or may not be inclined with respect to a tire circumferential direction. An inclination angle of the steel cord 21 with respect to the tire circumferential direction is not particularly limited, but is set, for example, in a range of 0° to 60°, preferably 5° to 45°, more preferably 10° to 30°.

The steel cord relating to the present embodiment has 1 to 4 steel wires which are also referred to as filaments. That is, the steel cord may be a single monofilament cord (i.e., a cord having a 1×1 structure and consisting of one filament) or may have 2 to 4 filaments.

When one steel cord has 2 to 4 filaments, the steel cord preferably has a twisted structure in which these filaments are twisted together in the longitudinal direction. The twist structure is not particularly limited, and can be, for example, a single-twist steel cord having a 1×N structure or a layer-twist steel cord having an N+M structure.

The single-twist structure can be expressed as, for example, a 1×N structure. The 1×N structure means a structure in which N filaments are twisted together so as to form a single layer (one layer). The "single layer" means a structure in which filaments are arranged so as to form a single layer (one layer) along a circumferential direction of one circle, in a cross section perpendicular to a longitudinal direction of a steel cord. Examples of the single-twist structure in the present embodiment include a 1×2 structure, a 1×3 structure, and a 1×4 structure.

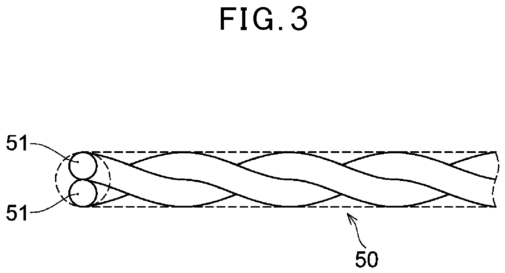

FIG. 3 is a perspective view of a steel cord having a 1×2 structure. In a steel cord 50 shown in FIG. 3, two filaments 51 are twisted together in a spiral shape along a longitudinal direction so as to form a single layer.

The layer-twist structure has a structure in which a plurality of filaments are wound in layers in order from the central part, in a cross section perpendicular to a longitudinal direction of a steel cord, and can be expressed as, for example, an N+M structure. The N+M structure means a structure having a core in which N filaments are twisted together in a spiral shape along the longitudinal direction and an outer sheath in which M filaments are twisted together in a spiral shape along the longitudinal direction of the core so as to cover the outer periphery of the core. Examples of the layer-twist structure in the present embodiment include a 2+2 structure.

A material of the steel filament is not particularly limited, and a HT material (High Tensile), an SHT material (Super High Tensile), an UHT material (Ultra High Tensile), etc. can be used. Moreover, a recycled iron obtained by melting a used iron product may be used. Besides, when a steel cord obtained by twisting a plurality of steel filaments together is used, a steel filament, which is pre-formed in a longitudinal direction, may be used, from the viewpoint of improving durability by making it easy for a topping rubber to penetrate into the steel cord.

A filament diameter D of a steel cord is 0.45 mm or less, preferably 0.42 mm or less, more preferably 0.40 mm or less, further preferably 0.38 mm or less, particularly preferably 0.35 mm or less, from the viewpoint of followability of a tread rubber to a road surface. Moreover, it is preferably 0.10 mm or more, more preferably 0.13 mm or more, further preferably 0.16 mm or more, further preferably 0.19 mm or more, further preferably 0.22 mm or more, particularly preferably 0.25 mm or more, from the viewpoint of securing durability of the steel cord against shock.

The steel cord relating to the present embodiment may be provided with a plating layer. Since the steel cord having a plating layer exerts a high wet heat-resistant adhesive performance even under a harsh condition of high temperature and humidity, peeling between the topping rubber and the steel cord can be prevented, and durability of the tire under a wet-heat condition can be improved. Besides, when the steel cord has a plurality of filaments, each filament can be provided with a plating layer on the surface thereof.

A configuration of the plating layer is not particularly limited, but a plating layer comprising a copper layer and a zinc layer is preferable, and a plating layer comprising a copper layer, a zinc layer, and a cobalt layer is more preferable. Since the steel cord having a ternary plating layer consisting of copper (Cu), zinc (Zn), and cobalt (Co) exerts a high wet heat-resistant adhesive performance even under a harsh condition of high temperature and humidity, peeling between the topping rubber and the steel cord can be prevented, and durability of the tire under a wet-heat condition can be improved.

A content of zinc in the plating layer is preferably 15% by mass or more, more preferably 20% by mass or more, further preferably 25% by mass or more, from the viewpoint of suppressing an excessive reaction of copper. Moreover, it is preferably 44% by mass or less, more preferably 40% by mass or less, further preferably 36% by mass or less, particularly preferably 32% by mass or less, from the viewpoint of suppressing a decrease in adhesion due to generation of an excessive zinc oxide.

A content of copper in the plating layer is preferably 55% by mass or more, more preferably 58% by mass or more, further preferably 61% by mass or more, from the viewpoint of adhesive performance. Moreover, it is preferably 78% by mass or less, more preferably 75% by mass or less, further preferably 72% by mass or less, from the viewpoint of preventing rubber deterioration due to copper elution under a hygrothermal environment.

A content of cobalt in the plating layer is preferably 1.0% by mass or more, more preferably 2.0% by mass or more, further preferably 3.0% by mass or more, from the viewpoint of a heat wet adhesive performance. Moreover, it is preferably 8.0% by mass or less, more preferably 7.0% by mass or less, further preferably 6.0% by mass or less, from the viewpoint of preventing occurrence of cracks during wire drawing.

The plating layer can be formed by plating a copper layer, a zinc layer, a cobalt layer, etc. on the filament before wire drawing, and then diffusing the metal of each layer formed on the surface of the filament by heat treatment. Besides, an order of lamination of layers formed on the filament to form the plating layer is not particularly limited.

Next, a filament having a plating layer can be formed by wire-drawing the heat-treated material so as to have a desired filament diameter. When the steel cord is composed of one filament, it can be used as it is after wire drawing. Moreover, when the steel cord has a plurality of filaments, a steel cord having a plated layer can be formed by, for example, twisting the obtained filaments together so as to have a desired twist structure after wire drawing.

The average thickness of the plating layer is preferably 0.10 $\mu$m or more, more preferably 0.13 $\mu$m or more, further preferably 0.16 $\mu$m or more, from the viewpoint of an initial adhesive performance. Moreover, it is preferably 0.40 $\mu$m or less, more preferably 0.35 $\mu$m or less, further preferably 0.30 $\mu$m or less, from the viewpoint of suppressing an excessive adhesive response.

The number E (also referred to as Ends) of steel cords per 50 mm width in a direction perpendicular to a longitudinal direction of a steel cord is, but not particularly limited to, preferably 20 or more, more preferably 25 or more, further preferably 30 or more, further preferably 35 or more, particularly preferably 40 or more. Moreover, E is preferably 90 or less, more preferably 80 or less, further preferably 70 or less, further preferably 60 or less, further preferably 55 or less, particularly preferably 50 or less.

$|S_{in}\text{-}S_{out}|$ is preferably 2% or more, more preferably 3% or more, further preferably 4% or more, where $S_{in}$ represents a groove area ratio, in %, of a ground-contacting surface of an inner tread part constituting an end side inside a vehicle, with a tire equator centered, and $S_{out}$ represents a groove area ratio, in %, of a ground-contacting surface of an outer tread part constituting an end side outside the vehicle. Moreover, $|S_{in}\text{-}S_{out}|$ is preferably 10% or less, more preferably 9% or less, further preferably 8% or less. By setting $|S_{in}\text{-}S_{out}|$ within the above-described range, it is considered that grip performance can be improved.

$S_{in}$ is preferably 8% or more, more preferably 12% or more, further preferably 18% or more. Moreover, $S_{in}$ is preferably 45% or less, more preferably 42% or less, further preferably 39% or less.

$S_{out}$ is preferably 5% or more, more preferably 10% or more, further preferably 15% or more. Moreover, $S_{out}$ is preferably 40% or less, more preferably 37% or less, further preferably 34% or less.

$S_{in}$ is preferably larger than $S_{out}$. When $S_{in}$ is larger than $S_{out}$, rigidity in a direction outside a vehicle becomes more increased than that in a direction inside the vehicle, and a cornering force ratio (CF ratio) of a rear cornering force to a front cornering force becomes increased, and therefore it is considered that linearity is improved and grip performance is further improved.

The acetone extraction amount A of the rubber composition is preferably 4% by mass or more, more preferably 7% by mass or more, further preferably 10% by mass or more, further preferably 13% by mass or more, further preferably 16% by mass or more, particularly preferably 18% by mass or more, from the viewpoints of followability of a tread rubber to a road surface and heat generation. Moreover, it is preferably 35% by mass or less, more preferably 33% by mass or less, further preferably 31% by mass or less, further preferably 29% by mass or less, particularly preferably 27% by mass or less, from the viewpoint of abrasion resistance.

The polymer amount P in the rubber composition is preferably 24% by mass or more, more preferably 26% by mass or more, further preferably 28% by mass or more, particularly preferably 30% by mass or more. Moreover, the polymer amount P in the rubber composition is preferably 37% by mass or less, more preferably 36% by mass or less, further preferably 35% by mass or less, particularly preferably 34% by mass or more.

Y calculated from A/P is an index representing a content of a plasticizing agent in a rubber composition. Y is 0.50 or more, preferably 0.53 or more, more preferably 0.56 or more, further preferably 0.59 or more. On the other hand, an upper limit value of Y is, but not particularly limited to, preferably 1.0 or less, more preferably 0.95 or less, further preferably 0.90 or less, further preferably 0.85 or less, particularly preferably 0.80 or less.

Y/D is 1.6 or more, preferably 1.7 or more, more preferably 1.8 or more, further preferably 1.9 or more, particularly preferably 2.0 or more, from the viewpoint of the effects of the present invention. On the other hand, an upper limit value of Y/D is, but not particularly limited to, preferably 8.0 or less, more preferably 6.0 or less, further preferably 4.0 or less, particularly preferably 3.0 or less.

$|S_{in}\text{-}S_{out}|/(Y/D)$ is preferably less than 5.0, more preferably less than 4.6, further preferably less than 4.2, particularly preferably less than 3.8. By setting $|S_{in}\text{-}S_{out}|/(Y/D)$ within the above-described ranges, it is considered that grip performance can be further improved. Moreover, $|S_{in}\text{-}S_{out}|/(Y/D)$ is preferably greater than 0, more preferably greater than 1.0, further preferably greater than 1.5, particularly preferably greater than 2.0.

[Rubber composition]

The rubber composition constituting the cap rubber layer of the tire relating to the present embodiment (hereinafter referred to as the rubber composition relating to the present embodiment) comprises a rubber component, liquid rubber, and a terpene-based resin, any of which can be produced using raw materials described below. The rubber composition relating to the present embodiment will be described below.

<Rubber component>

In the rubber composition relating to the present embodiment, a diene-based rubber is appropriately used as a rubber component. Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. Moreover, these diene-based rubbers may be modified rubbers treated with modifying groups capable of interacting with fillers such as carbon black, silica, and the like, or may be hydrogenated rubbers obtained by hydrogenating a part of an unsaturated bond. The diene-based rubber may be used alone, or two or more thereof may be used in combination. Moreover, as the diene-based rubber, an extended rubber which has been previously extended with a plasticizing agent which will be mentioned later may be used.

A content of a diene-based rubber in the rubber component is preferably 70% by mass or more, more preferably 80% by mass or more, further preferably 90% by mass or more, particularly preferably 95% by mass or more. Moreover, the rubber component may be one consisting of a diene-based rubber.

As the diene-based rubber component, at least one selected from the group consisting of an isoprene-based rubber, an SBR, and a BR is appropriately used. The diene-based rubber component preferably comprises an SBR, and more preferably comprises an SBR and an isoprene-based rubber and/or a BR. Moreover, it may be a rubber component consisting of an SBR, may be a rubber component consisting of an SBR and a BR, or may be a rubber component consisting of an SBR, a BR, and an isoprene-based rubber.

(Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

A NR is not particularly limited, and those common in the tire industry can be used, examples of which include, for example, SIR20, RSS#3, TSR20, and the like.

A content of an isoprene-based rubber in the rubber component is preferably 50% by mass or less, more preferably 40% by mass or less, further preferably 30% by mass or less, further preferably 20% by mass or less, particularly preferably 15% by mass or less, from the viewpoint of the effects of the present invention. On the other hand, a lower limit value of the content can be, but not particularly limited to, for example, 1% by mass or more, 3% by mass or more, or 5% by mass or more.

(SBR)

An SBR is not particularly limited, examples of which include, for example, an unmodified solution-polymerized SBR (S-SBR) and an emulsion-polymerized SBR (E-SBR), modified SBRs (a modified S-SBR, a modified E-SBR) thereof, and the like. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. These SBRs may be used alone, or two or more thereof may be used in combination.

As SBRs relating to the present embodiment, an extended SBR can be used, and a non-extended SBR can also be used. An extending amount of the extended SBR, i.e., a content of an extending plasticizing agent contained in the SBR when used is preferably 10 to 50 parts by mass based on 100 parts by mass of a rubber solid content of the SBR.

As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of an SBR is preferably 10% by mass or more, more preferably 15% by mass or more, further preferably 20% by mass or more. Moreover, the styrene content of the SBR is preferably 54% by mass or less, more preferably 52% by mass or less, further preferably 50% by mass or less, further preferably 46% by mass or less, particularly preferably 42% by mass or less. Besides, the styrene content of the SBR is measured by the above-described measuring method.

A vinyl content of an SBR is preferably 5 mol% or more, more preferably 10 mol% or more, further preferably 15 mol% or more, from the viewpoints of ensuring reactivity with silica and abrasion resistance. Moreover, the vinyl content of the SBR is preferably 45 mol% or less, more preferably 40 mol% or less, further preferably 35 mol% or less, from the viewpoints of elongation at break and abrasion resistance. Besides, the vinyl content of the SBR is measured by the above-described measuring method.

A weight-average molecular weight (Mw) of an SBR is preferably 100,000 or more, more preferably 200,000 or more, further preferably 300,000 or more, from the viewpoint of the effects of the present invention. Moreover, it is preferably 2,000,000 or less, more preferably 1,800,000 or less, further preferably 1,500,000 or less, from the viewpoint of cross-linking uniformity. Besides, the weight-average molecular weight of the SBR is measured by the above-described measuring method.

An content of an SBR in the rubber component can be appropriately selected so that, for example, a total styrene amount in the rubber component satisfies ranges mentioned below, but it is preferably 40% by mass or more, more preferably 50% by mass or more, further preferably 60% by mass or more, further preferably 70% by mass or more, particularly preferably 75% by mass or more. On the other hand, an upper limit value of the content can be, but not particularly limited to, 100% by mass, 99% by mass or less, 95% by mass or less, or 90% by mass or less.

(BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available from Zeon Corporation, UBE Corporation, JSR Corporation, etc. can be used. When the high cis BR is compounded, abrasion resistance can be improved. The cis content of the high cis BR is preferably 95 mol% or more, more preferably 96 mol% or more, further preferably 97 mol% or more. Besides, the cis content of the BR is measured by the above-described measuring method.

A content of an SBR in the rubber component is preferably 50% by mass or less, more preferably 40% by mass or less, further preferably 30% by mass or less, particularly preferably 25% by mass or less, from the viewpoint of the effects of the present invention. On the other hand, a lower limit value of the content can be, but not particularly limited to, for example, 1% by mass or more, 3% by mass or more, or 5% by mass or more.

A total styrene amount in the rubber component is preferably 6% by mass or more, more preferably 10% by mass or more, further preferably 14% by mass or more, further preferably 18% by mass or more, particularly preferably 20% by mass or more, from the viewpoint of the effects of the present invention. Moreover, the total styrene amount in the rubber component is preferably 54% by mass or less, more preferably 52% by mass or less, further preferably 50% by mass or less, further preferably 46% by mass or less, particularly preferably 42% by mass or less.

(Other rubber components)

The rubber component may comprise rubber components other than diene-based rubbers as long as they do not affect the effects of the present invention. As other rubber components other than diene-based rubbers, crosslinkable rubber components commonly used in the tire industry can be used, examples of which include, for example, non-diene-based rubbers such as a butyl rubber (IIR), a halogenated butyl rubber, an ethylene-propylene rubber, a polynorbornene rubber, a silicone rubber, a polyethylene chloride rubber, a fluorine rubber (FKM), an acrylic rubber (ACM), a hydrin rubber, and the like. Moreover, besides the above-described rubber components, the rubber component may or may not comprise a known thermoplastic elastomer. Other rubber components may be used alone, or two or more thereof may be used in combination.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a butadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}C$ that are about one trillionth of the number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1 \times 10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference for the $^{14}C$ concentration. As a specific reference material, an oxalic acid standard provided by NIST (National Institute of Standards and Technology) is used. A specific radioactivity of carbon in this oxalic acid (radioactivity intensity of $^{14}C$ per gram of carbon) is sorted for each carbon isotope, $^{13}C$ is corrected to a constant value, and a value corrected for attenuation from 1950 to the date of measurement is used as a standard $^{14}C$ concentration value (100%). A ratio of this value to a value actually measured for a sample becomes a pMC value.

Thus, if a rubber is produced from a material derived from 100% biomass, the $^{14}C$ concentration shows a value of approximately 110 pMC, often not being equal to 100 under a normal condition currently, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

<Filler>

The rubber composition relating to the present embodiment preferably comprises silica as a filler, and more preferably comprises silica and carbon black. Moreover, the filler may be a filler consisting of silica and carbon black.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. These silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.). As an amorphous silica extracted from rice husks, those commercially available from Wilmar, etc. can be used.

The nitrogen adsorption specific surface area ($N_2SA$) of silica is preferably 90 $m^2/g$ or more, more preferably 100 $m^2/g$ or more, further preferably 110 $m^2/g$ or more, from the viewpoints of abrasion resistance and elongation at break. Moreover, it is preferably 350 $m^2/g$ or less, more preferably 300 $m^2/g$ or less, further preferably 250 $m^2/g$ or less, from the viewpoints of heat generation and processability. Besides, the $N_2SA$ of silica is measured by the above-described measuring method.

The average primary particle size of silica is preferably 26 nm or less, more preferably 24 nm or less, further preferably 22 nm or less, particularly preferably 20 nm or less. A lower limit value of the average primary particle size is, but not particularly limited to, preferably 1 nm or more, more preferably 3 nm or more, further preferably 5 nm or more, from the viewpoint of dispersibility of silica. Besides, the average primary particle size of silica is measured by the above-described measuring method.

A content of silica when compounded based on 100 parts by mass of the rubber component is preferably 50 parts by mass or more, more preferably 70 parts by mass or more, further preferably 80 parts by mass or more, further preferably 90 parts by mass or more, particularly preferably 100 parts by mass or more, from the viewpoint of the effects of the present invention. Moreover, the content is preferably 150 parts by mass or less, more preferably 140 parts by mass or less, further preferably 130 parts by mass or less.

(Carbon black)

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. These carbon black may be used alone, or two or more thereof may be used in combination.

In the present specification, a "recovered carbon black" refers to carbon black obtained by pulverizing a product such as a used tire comprising carbon black and the like and baking the pulverized product, in which, after the product is subjected to oxidative combustion by heating in the air, a ratio of a mass of ash (ash content), which is a component that does not combust, is 13% by mass or more according to a thermal weight measurement method of JIS K 6226-2:2003. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.

As the recovered carbon black, those commercially available from Strebl Green Carbon Pte Ltd., LD Carbon, etc. can be used.

A nitrogen adsorption specific surface area ($N_2SA$) of carbon black is preferably 30 $m^2/g$ or more, more preferably 50 $m^2/g$ or more, further preferably 70 $m^2/g$ or more, particularly preferably 90 $m^2/g$ or more, from the viewpoint of reinforcing property. Moreover, it is preferably 200 $m^2/g$ or less, more preferably 150 $m^2/g$ or less, further preferably 120 $m^2/g$ or less, from the viewpoints of fuel efficiency and processability.

An average primary particle size of carbon black is preferably 36 nm or less, more preferably 32 nm or less, further preferably 28 nm or less, particularly preferably 24 nm or less. A lower limit of the average primary particle size is, but not particularly limited to, preferably 5 nm or more, more preferably 8 nm or more, further preferably 10 nm or more.

A content of carbon black when compounded based on 100 parts by mass of the rubber component is preferably 1 part by mass or more, more preferably 5 parts by mass or more, further preferably 10 parts by mass or more, further preferably 30 parts by mass or more, particularly preferably 50 parts by mass or more, from the viewpoint of reinforcing property. Moreover, it is preferably 150 parts by mass or less, more preferably 140 parts by mass or less, further preferably 130 parts by mass or less, from the viewpoint of suppressing heat generation.

(Other fillers)

Fillers other than silica and carbon black are not particularly limited, and, for example, those commonly used in the tire industry can be compounded such as aluminum hydroxide, alumina (aluminum oxide), calcium carbonate, magnesium sulfate, talc, clay, biochar (BIOCHAR), and the like. These other fillers may be used alone, or two or more thereof may be used in combination.

A total content of fillers based on 100 parts by mass of the rubber component is preferably 50 parts by mass or more, more preferably 70 parts by mass or more, further preferably 90 parts by mass or more, particularly preferably 100 parts by mass or more, from the viewpoint of the effects of the present invention. Moreover, the content is preferably 150 parts by mass or less, more preferably 140 parts by mass or less, further preferably 130 parts by mass or less.

(Silane coupling agent)

Silica is preferably used in combination with a silane coupling agent. The silane coupling agent is not particularly limited, and any silane coupling agent used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. As the silane coupling agent, for example, those commercially available from Evonik Industries AG, Momentive Performance Materials, etc. can be used. These silane coupling agents may be used alone, or two or more thereof may be used in combination.

A total content of silane coupling agents when compounded based on 100 parts by mass of the rubber component is preferably 0.5 parts by mass or more, more preferably 1.0 parts by mass or more, further preferably 2.0 parts by mass or more, particularly preferably 4.0 parts by mass or more, from the viewpoint of enhancing dispersibility of silica. Moreover, it is preferably 20 parts by mass or less, more preferably 15 parts by mass or less, further preferably 12 parts by mass or less, from the viewpoint of preventing deterioration of abrasion resistance.

<Other compounding agents>

The rubber composition relating to the present embodiment can appropriately comprise compounding agents conventionally and generally used in the tire industry, for example, a plasticizing agent, a vulcanized rubber particle (rubber powder), an antioxidant, wax, processing aid, stearic acid, zinc oxide, a vulcanizing agent, a vulcanization accelerator, and the like, in addition to the above-described components.

In the present specification, a "plasticizing agent" is a material that imparts plasticity to the rubber component, and has a concept that includes both a plasticizing agent in liquid (in a liquid state) at 25°C and a plasticizing agent that is solid at 25°C. Examples of the plasticizing agent include, a resin component, oil, a liquid rubber, an ester-based plasticizing agent, and the like. These plasticizing agents may be ones derived from petroleum or from mineral resources such as a natural gas and the like, biomass-derived ones, or naphtha-derived ones recycled from a rubber product or a non-rubber product. Moreover, low-molecular-weight hydrocarbon components obtained by pyrolyzing used tires or products containing these agents and performing extraction from the pyrolysate may be used as plasticizing agents. These plasticizing agents may be used alone, or two or more thereof may be used in combination.

The rubber composition relating to the present embodiment is characterized by comprising a liquid rubber and a terpene-based resin as plasticizing agents. By using the liquid rubber and the terpene-based resin in combination, dispersibility of the liquid rubber in the rubber composition can be easily improved due to compatibility of the terpene-based resin.

(Resin component)

The rubber composition relating to the present embodiment comprises a terpene-based resin as a resin component, which may be used in combination with another resin component.

A "terpene-based resin" refers to resin comprising a terpene compound such as $\alpha$-pinene, $\beta$-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used. These terpene-based resins may be used alone, or two or more thereof may be used in combination.

Other resin components other than a terpene-based resin are not particularly limited, but any resin components commonly used in the tire industry can be used, examples of which include, for example, adhesive resins such as a dicyclopentadiene-based resin, an aromatic vinyl-based resin, a C9-based resin, a C5-based resin, a C5/C9-based resin, a rosin-based resin, a phenol-based resin, and the like. These resin components may be used alone, or two or more thereof may be used in combination. Each resin component may also be used alone, respectively, or two or more thereof may be used in combination.

A "dicyclopentadiene-based resin" refers to resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, **ENEOS** Corporation, Zeon Corporation, Maruzen Petrochemical Co., Ltd., etc. can be used.

A "C9-based resin" refers to resin obtained by polymerizing C9 fractions, and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

A "C5-based resin" refers to resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

A "C5/C9-based resin" refers to resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

An "aromatic vinyl-based resin" refers to resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methyl-styrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

A "rosin-based resin" refers to resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., **IREC** Co., Ltd., etc. can be used.

A "phenol-based resin" refers to resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

A softening point of a resin component is preferably 35°C or higher, more preferably 50°C or higher, further preferably 65°C or higher. Moreover, it is preferably 150°C or lower, more preferably 140°C or lower, further preferably 130°C or lower, from the viewpoints of processability and improvement of dispersibility of a rubber component with a filler. Besides, the softening point of the adhesive resin is measured by the above-described measuring method.

A content of a terpene-based resin based on 100 parts by mass of the rubber component is preferably 5 parts by mass or more, more preferably 10 parts by mass or more, further preferably 15 parts by mass or more, particularly preferably 20 parts by mass or more. Moreover, it is preferably 60 parts by mass or less, more preferably 50 parts by mass or less, further preferably 40 parts by mass or less, particularly preferably 35 parts by mass or less, from the viewpoint of suppressing heat generation.

A total content of resin components based on 100 parts by mass of the rubber component is preferably 5 parts by mass or more, more preferably 10 parts by mass or more, further preferably 15 parts by mass or more, particularly preferably 20 parts by mass or more, from the viewpoint of the effects of the present invention. Moreover, it is preferably 60 parts by mass or less, more preferably 50 parts by mass or less, further preferably 40 parts by mass or less, particularly preferably 35 parts by mass or less, from the viewpoint of suppressing heat generation.

A liquid rubber is not particularly limited as long as it is a polymer in a liquid state at 25°C, examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

A weight-average molecular weight (Mw) of a liquid rubber is usually less than 10000, preferably 9000 or less, more preferably 6000 or less, further preferably 4500 or less. Moreover, the Mw of the liquid rubber is preferably 100 or more, more preferably 500 or more, further preferably 1000 or more, particularly preferably 2000 or more. When the Mw of the liquid rubber is within the above-described ranges, the effects of the present invention tend to be better obtained. Besides, in the present specification, the liquid rubber is not included in the above rubber component.

A content of a liquid rubber based on 100 parts by mass of the rubber component is preferably 1 part by mass or more, more preferably 3 parts by mass or more, further preferably 5 parts by mass or more, further preferably 7 parts by mass or more, particularly preferably 10 parts by mass or more, from the viewpoint of the effects of the present invention. Moreover, the content is preferably 50 parts by mass or less, more preferably 40 parts by mass or less, further preferably 30 parts by mass or less, particularly preferably 25 parts by mass or less.

A ratio of a liquid rubber to a total content of liquid rubbers and terpene-based resins in the rubber composition is preferably 5% by mass or more, more preferably 10% by mass or more, further preferably 15% by mass or more, particularly preferably 20% by mass or more. Moreover, the ratio of the liquid rubber to the total content of liquid rubbers and terpene-based resins in the rubber composition is preferably 80% by mass or less, more preferably 67% by mass or less, further preferably 55% by mass or less, further preferably 50% by mass or less, particularly preferably 45% by mass or less.

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant, may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like. The mineral oil may be used alone, or two or more thereof may be used in combination.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a heavy chloroform in which a rubber composition comprising triacylglycerol is immersed at 25°C for 24 hours and then removed is subjected to $^1$H-NMR at room temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, a whale oil, or an oleyl alcohol that may be derived therefrom, etc.

A content of oil when compounded based on 100 parts by mass of the rubber component is preferably 5 parts by mass or more, more preferably 10 parts by mass or more, further preferably 20 parts by mass or more, particularly preferably 30 parts by mass or more, from the viewpoint of the effects of the present invention. Moreover, the content is preferably 90 parts by mass or less, more preferably 80 parts by mass or less, further preferably 70 parts by mass or less, particularly preferably 60 parts by mass or less.

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

A content of a plasticizing agent based on 100 parts by mass of the rubber component (a total amount of all of a plurality of plasticizing agents when used in combination) is preferably 30 parts by mass or more, more preferably 40 parts by mass or more, further preferably 50 parts by mass or more, particularly preferably 60 parts by mass or more, from the viewpoint of the effects of the present invention. Moreover, the content is preferably 100 parts by mass or less, more preferably 90 parts by mass or less, further preferably 80 parts by mass or less.

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle may be used alone, or two or more thereof may be used in combination.

The vulcanized rubber particle is not particularly limited and may be a non-modified vulcanized rubber particle or a modified vulcanized rubber particle.

As commercially available products of vulcanized rubbers, for example, products from Lehigh Technologies, Muraoka Rubber Reclaiming Co., Ltd., etc. can be used.

Examples of the antioxidant include, but not particularly limited to, a naphthylamine-based antioxidant such as phenyl-$\alpha$-naphthylamine and the like; a diphenylamine-based antioxidant such as an octylated diphenylamine, 4,4'-bis($\alpha,\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. These antioxidants may be used alone, or two or more thereof may be used in combination.

A content of an antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoint of abrasion resistance.

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably 0.5 parts by mass or more, more preferably 0.8 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. These processing aid may be used alone, or two or more thereof may be used in combination.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of a vulcanizing agent when an oil-containing sulfur is used as the vulcanizing agent shall be a total content of pure sulfur comprised in the oil-containing sulfur.

As a vulcanizing agent other than sulfur, a known organic cross-linking agent can also be used. The organic cross-linking agent is not particularly limited as long as it can form cross-linked chains other than a polysulfide bond, examples of which, include, for example, an alkylphenol-sulfur chloride condensate, hexamethylene-1,6-sodium bisthiosulfate dihydrate, 1,6-bis(N,N'-dibenzylthiocarbamoyldithio)hexane, dicumylperoxide, and the like. As these organic cross-linking agents, those commercially available from Taoka Chemical Co., Ltd., LANXESS, Flexsys, etc. can be used.

Examples of a vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, a caprolactam disulfide, and the like. These vulcanization accelerators may be used alone, or two or more thereof may be used in combination. Among them, one or more vulcanization accelerators selected from the group consisting of a sulfenamide-based vulcanization accelerator, a thiazole-based vulcanization accelerator, and a guanidine-based vulcanization accelerator are preferable, from the viewpoint that desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them, MBTS and MBT are preferable, and MBTS is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, DPG is preferable. However, from the viewpoint of the effects of the present invention, a content of the guanidine-based vulcanization accelerator in the rubber composition constituting the topping rubber based on 100 parts by mass of the rubber component is preferably 0.5 parts by mass or less, more preferably 0.3 parts by mass or less, further preferably 0.1 parts by mass or less, and it is particularly preferable that the rubber composition does not comprise a guanidine-based vulcanization accelerator.

A content of a vulcanization accelerator when compounded based on 100 parts by mass of the rubber component is preferably 0.5 parts by mass or more, more preferably 1.0 parts by mass or more, further preferably 1.5 parts by mass or more, from the viewpoint of securing a sufficient vulcanization rate. Moreover, the content of the vulcanization accelerator is preferably 10 parts by mass or less, more preferably 5.0 parts by mass or less, from the viewpoint of suppressing blooming.

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

[Production of rubber composition and tire]

The rubber composition relating to the present embodiment can be produced by a known method. For example, it can be produced by kneading each of the above-described components using a rubber kneading apparatus such as an open roll, a closed type kneader (Bunbury mixer, kneader, etc.), and the like.

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them.

Furthermore, the base kneading step can be divided into a plurality of steps, if desired.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes.

The tire relating to the present embodiment can be produced by a usual method using each corresponding rubber composition. That is, the steel cord is covered with an unvulcanized rubber composition corresponding to a belt topping rubber, and a ply forming a belt layer is obtained as a steel cord-rubber composite. Moreover, the unvulcanized rubber composition corresponding to a cap rubber layer as obtained by the above-described method is molded into a shape of the cap rubber layer. The tire can be produced by attaching them together with other tire members and molding them by a usual method on a tire molding machine, to form an unvulcanized tire, followed by heating and pressurizing this unvulcanized tire in a vulcanizer. A vulcanization condition is not particularly limited. Examples of vulcanization include, for example, a method of vulcanizing at 150 to 200°C for 10 to 30 minutes.

<Application>

The tire relating to the present embodiment can be a general-purpose tire such as a tire for a passenger car, a tire for a truck/bus, a motorcycle tire, and the like, or can be a racing tire. Besides, the tire for a passenger car is a tire on the premise that it is mounted on a car running on four wheels and refers to one having a maximum load capacity of 1000 kg or less. A type of tire is not particularly limited, and may be either a pneumatic tire or a solid tire. Moreover, the tire relating to the present embodiment can be used as an all-season tire, a summer tire, or a winter tire such as a stud less tire and the like.

EXAMPLES

Examples considered to be preferable in implementation (Examples) are shown below, though the scope of the present invention is not limited to Examples. Results calculated based on the following evaluation methods considering a tire comprising a cap rubber layer obtained according to the compoundings in Tables 1 and 2 and a belt layer having a steel cord described in Tables 1 and 2 using various chemicals shown below are shown in Tables 1 and 2.

Various chemicals used in Examples and Comparative examples are collectively shown below.

NR: TSR20

SBR1: SBR1502 manufactured by JSR Corporation (unmodified E-SBR, styrene content: 23.5% by mass, vinyl content: 18 mol%, Mw: 420,000)

SBR2: SLR6430 manufactured by Trinseo PLC (S-SBR, styrene content: 40% by mass, vinyl bond amount: 24 mol%, Mw: 1,010,000, oil-extended product comprising 37.5 parts by mass of oil content based on 100 parts by mass of rubber component)

BR: Ubepol BR (Registered Trademark) 150B manufactured by UBE Corporation (unmodified BR, cis content: 97 mol%, Mw: 440,000)

Carbon black 1: Show Black N330 manufactured by Cabot Japan K.K. ($N_2SA$: 75 $m^2/g$, average primary particle size: 30 nm)

Carbon black 2: Show Black N220 manufactured by Cabot Japan K.K. ($N_2SA$: 115 $m^2/g$, average primary particle size: 22 nm)

Silica 1: Zeosil 1115MP manufactured by Solvay ($N_2SA$: 115 $m^2/g$, average primary particle size: 24 nm)

Silica 2: ZEOSIL 115GR manufactured by Solvay ($N_2SA$: 115 $m^2/g$, average primary particle size: 20 nm)

Silane coupling agent: Si266 manufactured by Evonik Industries AG (bis(3-triethoxysilylpropyl)disulfide)

Liquid rubber 1: Ricon 142 manufactured by Cray Valley (liquid BR)

Liquid rubber 2: Ricon 100 manufactured by Cray Valley (liquid SBR)

Resin component 1: YS resin TO-125 manufactured by Yasuhara Chemical Co., Ltd. (an aromatic-modified terpene resin, softening point: 125°C)

Resin component 2: Sylvares SA85 manufactured by Kraton Corporation (copolymer of $\alpha$-methylstyrene and styrene, softening point: 85°C)

Oil: VivaTec 500 manufactured by H&R Group (TDAE oil)

Antioxidant: Antigen 6C manufactured by Sumitomo Chemical Co., Ltd. (N-(1,3-dimethylbutyl)-N'-phenyl-p-phenylenediamine)

Wax: SUNNOC N manufactured by Ouchi Shinko Chemical Industry Co., Ltd. (paraffin wax)

Stearic acid: Bead stearic acid "CAMELLIA" manufactured by NOF CORPORATION

Zinc oxide: Zinc oxide No. 2 manufactured by Mitsui Mining & Smelting Co., Ltd.

Sulfur: Powdered sulfur manufactured by Karuizawa Sulfur Co, Ltd. (5% oil-containing powdered sulfur)

Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

(Production of belt layer)

The steel cord described in Tables 1 and 2 is covered with an unvulcanized rubber composition corresponding to a belt topping rubber, and a ply forming a belt layer is obtained as a steel cord-rubber composite.

(Production of tire)

According to the compounding formulations shown in Tables 1 and 2, using a 1.7 L closed Banbury mixer, all chemicals other than sulfur and vulcanization accelerators are kneaded until a temperature reaches a discharge temperature at 160°C for 5 minutes to obtain a kneaded product. Next, using a twin-screw open roll, vulcanizing agents and vulcanization accelerators are added to the obtained kneaded product, and the mixture is kneaded for 4 minutes until the temperature reaches 105°C to obtain an unvulcanized rubber composition. The obtained unvulcanized rubber composition is molded into a shape of a cap rubber layer, which is then attached together with the belt ply and other tire members, producing an unvulcanized tire, followed by vulcanized at 170°C to obtain each test tire (size: 205/65R15, rim: 15×6JJ, internal pressure: 230 kPa, $S_{in}$: 38%, $S_{out}$: 31%). Here, the steel cord used for the belt layer is a ternary plating steel cord having an average thickness of a plating layer of 0.19 μm, composition of the plating layer of 68% by mass of Cu, 28% by mass of Zn, and 4% by mass of Co. Besides, in configurations of steel cords in Tables, "1×2 45e" means that there are 45 steel cords of 1×2 structure per 50 mm width in a direction perpendicular to a longitudinal direction of a steel cord (45 Ends).

<Measurement of acetone extraction amount (AE amount)>

An AE amount is measured for each of rubber test pieces produced by being cut out from a cap rubber layer of each test tire. The "AE amount" is calculated by the following equation after immersing each rubber test piece in acetone for 72 hours to extract a soluble component and measuring masses of each rubber test piece before and after extraction in accordance with JIS K 6229:2015.

(Acetone extraction amount (% by mass)) = {(mass of rubber test piece before extraction - mass of rubber test piece after extraction) / (mass of rubber test piece before extraction)} × 100.

<Measurement of polymer amount>

A polymer amount is calculated by the following equation after pyrolyzing the rubber test piece after acetone extraction while raising a temperature from room temperature to 750°C at a rate of 10°C/min in a nitrogen stream and measuring masses of each rubber test piece before and after pyrolysis by a thermal weight measuring method according to JIS K 6226-2:2003.

(Polymer amount (% by mass)) = {(mass of rubber test piece before pyrolysis - mass of rubber test piece after pyrolysis) / (mass of rubber test piece before pyrolysis)} × 100.

<Grip performance during cornering>

The test tire is mounted on all wheels of a domestic FR vehicle (2000 cc), and actual vehicle running with 10 laps is performed on a test course with a dry asphalt road surface. Test drivers sensory-evaluate stability of control when a brake is applied and the vehicle enters a corner during running on a straight line at a speed of 100 km/h. The evaluations are performed using an integer value of 1 to 5 points, and based on evaluation criteria that the higher the score is, the better the stability of control during steering is, a total score by 20 test drivers is calculated. A total score of each of the reference Comparative examples is converted into a reference value (100), and an evaluation result for each test tire is indicated as an index in proportion to the total score. The results show that the larger the numerical value is, the higher the grip performance during cornering is.

Table 1

| | Comparative example | | | | | | |
|---|---|---|---|---|---|---|---|
| | 1 | 2 | 3 | 4 | 5 | 6 | 7 |
| **Compounding amount (parts by mass)** | | | | | | | |
| NR | - | - | - | - | - | - | - |
| SBR1 | 100 | 100 | 100 | 100 | 100 | 100 | - |
| SBR2 (Oil content) | - | - | - | - | - | - | 110 (30) |
| BR | - | - | - | - | - | - | 20 |
| Carbon black 1 | 10 | 10 | 10 | 10 | 10 | 10 | 10 |
| Silica 1 | 120 | 120 | 120 | 120 | 120 | 120 | 120 |
| Silica 2 | - | - | - | - | - | - | - |
| Silane coupling agent | 12 | 12 | 12 | 12 | 12 | 12 | 12 |
| Liquid rubber 1 | 10 | 10 | 15 | 15 | - | 10 | 5 |
| Resin component 1 | 17 | 17 | 25 | - | 30 | 30 | 20 |
| Resin component 2 | - | - | - | 25 | - | - | - |
| Oil | - | - | 5 | 5 | 15 | 5 | 5 |
| Antioxidant | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 |
| Zinc oxide | 2.5 | 2.5 | 2.5 | 2.5 | 2.5 | 2.5 | 2.5 |
| Sulfur | 2.0 | 2.0 | 2.0 | 2.0 | 2.0 | 2.0 | 2.0 |
| Vulcanization accelerator 1 | 2.0 | 2.0 | 2.0 | 2.0 | 2.0 | 2.0 | 2.0 |
| Vulcanization accelerator 2 | 3.0 | 3.0 | 3.0 | 3.0 | 3.0 | 3.0 | 3.0 |
| Total styrene amount (% by mass) | 23.5 | 23.5 | 23.5 | 23.5 | 23.5 | 23.5 | 32 |

| | Comparative example | | | | | | |
|---|---|---|---|---|---|---|---|
| | 1 | 2 | 3 | 4 | 5 | 6 | 7 |
| Acetone extraction amount A (% by mass) | 9.5 | 9.5 | 14.9 | 14.9 | 14.9 | 14.9 | 18.9 |
| Polymer amount P (% by mass) | 35.1 | 35.1 | 33.1 | 33.1 | 33.1 | 33.1 | 31.5 |
| Y(=A/P) | 0.27 | 0.27 | 0.45 | 0.45 | 0.45 | 0.45 | 0.60 |
| Outer diameter D of filament (mm) | 0.50 | 0.40 | 0.50 | 0.30 | 0.30 | 0.25 | 0.40 |
| Y/D | 0.5 | 0.7 | 0.9 | 1.5 | 1.5 | 1.8 | 1.5 |
| $|S_{in}-S_{out}|/(Y/D)$ | 13.0 | 10.4 | 7.8 | 4.7 | 4.7 | 3.9 | 4.7 |
| Configuration of steel cord | 1×2 18e | 1×2 18e | 1×2 18e | 1×2 18e | 1×2 18e | 1×2 18e | 1×2 18e |
| Grip performance during cornering | 98 | 100 | 96 | 94 | 98 | 100 | 96 |

(continued)

| | Example | | | | | | | | |
|---|---|---|---|---|---|---|---|---|---|
| | 1 | 2 | 3 | 4 | 5 | 6 | 7 | 8 | 9 |
| Compounding amount (parts by mass) | | | | | | | | | |
| NR | - | - | - | 10 | - | - | - | - | - |
| SBR1 | 100 | - | - | - | - | - | - | - | - |
| SBR2 (Oil content) | - | 137.5 (37.5) | 110 (30) | 110 (30) | 137.5 (37.5) | 137.5 (37.5) | 137.5 (37.5) | 137.5 (37.5) | 137.5 (37.5) |
| BR | - | - | 20 | 10 | - | - | - | - | - |
| Carbon black 1 | 10 | 10 | 10 | 10 | 10 | 10 | 10 | 10 | 10 |
| Silica 1 | 120 | 120 | 120 | 120 | - | 120 | 120 | 120 | 90 |
| Silica 2 | - | - | - | - | 120 | - | - | - | - |
| Silane coupling agent | 12 | 12 | 12 | 12 | 12 | 12 | 12 | 12 | 9 |
| Liquid rubber 1 | 25 | 5 | 5 | 5 | 5 | 5 | 5 | 5 | 5 |
| Resin component 1 | 35 | 20 | 20 | 20 | 20 | 20 | 20 | 20 | 20 |
| Resin component 2 | - | - | - | - | - | - | - | - | - |
| Oil | 5 | 5 | 5 | 5 | 5 | 5 | 5 | 5 | 5 |
| Antioxidant | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 |
| Zinc oxide | 2.5 | 2.5 | 2.5 | 2.5 | 2.5 | 2.5 | 2.5 | 2.5 | 2.5 |
| Sulfur | 2.0 | 2.0 | 2.0 | 2.0 | 2.0 | 2.0 | 2.0 | 2.0 | 2.0 |
| Vulcanization accelerator 1 | 2.0 | 2.0 | 2.0 | 2.0 | 2.0 | 2.0 | 2.0 | 2.0 | 2.0 |
| Vulcanization accelerator 2 | 3.0 | 3.0 | 3.0 | 3.0 | 3.0 | 3.0 | 3.0 | 3.0 | 3.0 |
| Total styrene amount (% by mass) | 23.5 | 40 | 32 | 32 | 40 | 40 | 40 | 40 | 40 |
| Acetone extraction amount A (% by mass) | 20.2 | 20.8 | 18.9 | 18.9 | 20.8 | 20.8 | 20.8 | 20.8 | 23.1 |
| Polymer amount P (% by mass) | 31.0 | 30.8 | 31.5 | 31.5 | 30.8 | 30.8 | 30.8 | 30.8 | 34.2 |
| Y(=A/P) | 0.65 | 0.68 | 0.60 | 0.60 | 0.68 | 0.68 | 0.68 | 0.68 | 0.68 |
| Outer diameter D of filament (mm) | 0.30 | 0.30 | 0.30 | 0.30 | 0.30 | 0.30 | 0.30 | 0.40 | 0.30 |
| Y/D | 2.2 | 2.3 | 2.0 | 2.0 | 2.3 | 2.3 | 2.3 | 1.7 | 2.3 |
| $|S_{in}-S_{out}|/(Y/D)$ | 3.2 | 3.1 | 3.5 | 3.5 | 3.1 | 3.1 | 3.1 | 4.1 | 3.1 |
| Configuration of steel cord | 1×2 45e | 1×2 45e | 1×2 45e | 1×2 45e | 1×2 45e | 1×1 35e | 1×4 26e | 1×2 45e | 1×2 45e |
| Grip performance during cornering | 128 | 164 | 114 | 126 | 168 | 176 | 132 | 124 | 126 |

Table 2

| | Comparative example | | | | | |
|---|---|---|---|---|---|---|
| | 8 | 9 | 10 | 11 | 12 | 13 |
| Compounding amount (parts by mass) | | | | | | |
| NR | - | - | - | - | - | - |

(continued)

| | Comparative example | | | | | |
|---|---|---|---|---|---|---|
| | 8 | 9 | 10 | 11 | 12 | 13 |
| **Compounding amount (parts by mass)** | | | | | | |
| SBR1 | 100 | 100 | 100 | 100 | 100 | 100 |
| SBR2 (Oil content) | - | - | - | - | - | - |
| BR | - | - | - | - | - | - |
| Carbon black 2 | 120 | 120 | 120 | 120 | 120 | 120 |
| Liquid rubber 2 | 10 | 10 | 15 | 15 | - | 10 |
| Resin component 1 | 15 | 15 | 25 | - | 40 | 30 |
| Resin component 2 | - | - | - | 25 | - | - |
| Oil | - | - | 5 | 5 | 5 | 5 |
| Antioxidant | 2.0 | 2.0 | 2.0 | 2.0 | 2.0 | 2.0 |
| Wax | 2.0 | 2.0 | 2.0 | 2.0 | 2.0 | 2.0 |
| Stearic acid | 2.0 | 2.0 | 2.0 | 2.0 | 2.0 | 2.0 |
| Zinc oxide | 2.5 | 2.5 | 2.5 | 2.5 | 2.5 | 2.5 |
| Sulfur | 2.0 | 2.0 | 2.0 | 2.0 | 2.0 | 2.0 |
| Vulcanization accelerator 1 | 2.0 | 2.0 | 2.0 | 2.0 | 2.0 | 2.0 |
| Total styrene amount (% by mass) | 23.5 | 23.5 | 23.5 | 23.5 | 23.5 | 23.5 |
| Acetone extraction amount A (% by mass) | 9.7 | 9.7 | 16.2 | 16.2 | 16.2 | 9.7 |
| Polymer amount P (% by mass) | 38.8 | 38.8 | 36.0 | 36.0 | 36.0 | 38.8 |
| Y(=A/P) | 0.25 | 0.25 | 0.45 | 0.45 | 0.45 | 0.25 |
| Outer diameter D of filament (mm) | 0.50 | 0.40 | 0.50 | 0.30 | 0.30 | 0.50 |
| Y/D | 0.5 | 0.6 | 0.9 | 1.5 | 1.5 | 0.5 |
| $|S_{in}-S_{out}|/(Y/D)$ | 14.0 | 11.2 | 7.8 | 4.7 | 4.7 | 14.0 |
| Configuration of steel cord | 1×2 18e | 1×2 18e | 1×2 18e | 1×2 18e | 1×2 18e | 1×2 18e |
| Grip performance during cornering | 96 | 100 | 96 | 90 | 92 | 96 |

| | Example | | | | | |
|---|---|---|---|---|---|---|
| | 10 | 11 | 12 | 13 | 14 | 15 |
| **Compounding amount (parts by mass)** | | | | | | |
| NR | - | - | - | 10 | - | - |
| SBR1 | 100 | - | - | - | - | - |
| SBR2 (Oil content) | - | 137.5 (37.5) | 110 (30) | 110 (30) | 137.5 (37.5) | 137.5 (37.5) |
| BR | - | - | 20 | 10 | - | - |
| Carbon black 2 | 120 | 120 | 120 | 120 | 120 | 120 |
| Liquid rubber 2 | 25 | 10 | 10 | 10 | 10 | 10 |
| Resin component 1 | 35 | 20 | 25 | 25 | 20 | 20 |
| Resin component 2 | - | - | - | - | - | - |
| Oil | 5 | 5 | 5 | 5 | 5 | 5 |
| Antioxidant | 2.0 | 2.0 | 2.0 | 2.0 | 2.0 | 2.0 |
| Wax | 2.0 | 2.0 | 2.0 | 2.0 | 2.0 | 2.0 |
| Stearic acid | 2.0 | 2.0 | 2.0 | 2.0 | 2.0 | 2.0 |
| Zinc oxide | 2.5 | 2.5 | 2.5 | 2.5 | 2.5 | 2.5 |
| Sulfur | 2.0 | 2.0 | 2.0 | 2.0 | 2.0 | 2.0 |
| Vulcanization accelerator 1 | 2.0 | 2.0 | 2.0 | 2.0 | 2.0 | 2.0 |
| Total styrene amount (% by mass) | 23.5 | 40 | 32 | 32 | 40 | 40 |

(continued)

| | Example | | | | | |
|---|---|---|---|---|---|---|
| | 10 | 11 | 12 | 13 | 14 | 15 |
| Compounding amount (parts by mass) | | | | | | |
| Acetone extraction amount A (% by mass) | 21.8 | 23.8 | 23.1 | 23.1 | 23.8 | 23.8 |
| Polymer amount P (% by mass) | 33.6 | 32.8 | 33.1 | 33.1 | 32.8 | 32.8 |
| Y(=A/P) | 0.65 | 0.73 | 0.70 | 0.70 | 0.73 | 0.73 |
| Outer diameter D of filament (mm) | 0.30 | 0.30 | 0.30 | 0.30 | 0.30 | 0.30 |
| Y/D | 2.2 | 2.4 | 2.3 | 2.3 | 2.4 | 2.4 |
| $|S_{in}-S_{out}|/(Y/D)$ | 3.2 | 2.9 | 3.0 | 3.0 | 2.9 | 2.9 |
| Configuration of steel cord | 1×2 45e | 1×2 45e | 1×2 45e | 1×2 45e | 1×1 35e | 1×4 26e |
| Grip performance during cornering | 120 | 148 | 126 | 120 | 174 | 140 |

REFERENCE SIGNS LIST

11. Tire
12. Tread part
13. Sidewall part
14. Bead part
15. Inner liner
16. Carcass
17. Belt layer
18. Bead core
21, 50. Steel cord
22. Topping rubber
51. Filament
CL. Center line

**Claims**

1. A tire comprising a tread part and a belt layer,

    the tread part having at least one rubber layer,
    wherein a cap rubber layer constituting a tread surface of the tread part is composed of a rubber composition comprising a rubber component, a liquid rubber, and a terpene-based resin,
    wherein the belt layer has a steel cord consisting of 1 to 4 filaments, wherein an outer diameter D of the filament is 0.45 mm or less, preferably 0.10 mm or more and 0.42 mm or less, and
    wherein Y is 0.50 or more, preferably 0.53 or more, more preferably 0.56 or more and 1.0 or less, and Y/D is 1.6 or more, preferably 2.0 or more and 8.0 or less, when Y=A/P is defined, where A represents an acetone extraction amount, in % by mass, of the rubber composition and P represents a polymer amount, in % by mass, in the rubber composition.

2. The tire of claim 1, wherein the rubber component comprises 50% by mass or more, preferably 60% by mass or more, more preferably 70% by mass or more of a styrene-butadiene rubber.

3. The tire of claim 1 or 2, wherein the rubber composition comprises 80 parts by mass or more, preferably 100 parts by mass or more of silica, based on 100 parts by mass of the rubber component.

4. The tire of any one of claims 1 to 3, wherein the rubber composition comprises silica having an average primary particle size of 20 nm or less.

5. The tire of any one of claims 1 to 4, wherein a total styrene amount in the rubber component is 20% by mass or more.

6. The tire of any one of claims 1 to 5, wherein the steel cord has a 1×1 structure.

7. The tire of any one of claims 1 to 5, wherein the steel cord has a 1×4 structure.

8. The tire of any one of claims 1 to 7, wherein the number of the steel cords arranged per 50 mm in a tire width direction is 20 or more and 60 or less, preferably 25 or more and 55 or less.

9. The tire of any one of claims 1 to 8, wherein the steel cord has a ternary plating layer consisting of copper, zinc, and cobalt.

10. The tire of any one of claims 1 to 9, wherein $|S_{in}-S_{out}|/(Y/D)$ is greater than 0 and less than 5.0, preferably greater than 1.0 and less than 4.6, where $S_{in}$ represents a groove area ratio, in %, of a ground-contacting surface of an inner tread part constituting an end side inside a vehicle, with a tire equator centered, and $S_{out}$ represents a groove area ratio, in %, of a ground-contacting surface of an outer tread part constituting an end side outside the vehicle.

# FIG. 1

# FIG.2

# FIG. 3

Europäisches
Patentamt
European
Patent Office
Office européen
des brevets

# EUROPEAN SEARCH REPORT

**Application Number**

EP 25 19 3046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 253 088 A1 (SUMITOMO RUBBER IND [JP]) 4 October 2023 (2023-10-04) | 1-8 | INV. B60C1/00 |
| Y | * paragraphs [0222] - [0227]; claims 1-21; figure 1; tables 1-5 * | 9,10 | B60C9/00 B60C9/20 B60C11/03 |
| Y | EP 4 282 914 A1 (SUMITOMO RUBBER IND [JP]) 29 November 2023 (2023-11-29) * claims 1-10; figures 1-5 * | 9 | |
| Y | EP 4 190 587 A1 (SUMITOMO RUBBER IND [JP]) 7 June 2023 (2023-06-07) * claims 1-8; figure 1 * | 10 | |

**TECHNICAL FIELDS SEARCHED (IPC)**

B60C

The present search report has been drawn up for all claims

| Place of search | Date of completion of the search | Examiner |
|---|---|---|
| Munich | 28 October 2025 | Carneiro, Joaquim |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 19 3046

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2025

| Patent document cited in search report | | Publication date | Patent family member(s) | | Publication date |
|---|---|---|---|---|---|
| EP 4253088 | A1 | 04-10-2023 | EP | 4253088 A1 | 04-10-2023 |
| | | | US | 2023302851 A1 | 28-09-2023 |
| EP 4282914 | A1 | 29-11-2023 | EP | 4282914 A1 | 29-11-2023 |
| | | | JP | 2023173220 A | 07-12-2023 |
| EP 4190587 | A1 | 07-06-2023 | EP | 4190587 A1 | 07-06-2023 |
| | | | JP | 2023082470 A | 14-06-2023 |
| | | | US | 2023173843 A1 | 08-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012158662 A
- JP 2009002594 A
- EP 3427975 A
- JP 6856781 B
- EP 3173251 A

**Non-patent literature cited in the description**

- JIS K 6226-2:2003
- JIS K 6239-2. 2017
- JIS K 6217-2. 2017
- JIS K 6220-1. 2015, vol. 7, 7
- *Akita Prefectural University Web Journal B*, 2019, vol. 6, 216-222
- *JIS K 6226-2*, 2003
- *Rubber Chemistry and Technology*, 2012, vol. 85 (3), 408-449
- *Powder Technology*, 2005, vol. 160, 190-193